Europäisches Patentamt

European Patent Office

Office européen des brevets

(19)

(11) Numéro de publication: **0 050 829**
**B1**

(12) **FASCICULE DE BREVET EUROPEEN**

(45) Date de publication du fascicule du brevet: **08.01.86**

(21) Numéro de dépôt: **81108605.7**

(22) Date de dépôt: **21.10.81**

(51) Int. Cl.⁴: **A 01 C 7/04**

(54) Elément semeur pour parcelles expérimentales.

(30) Priorité: **29.10.80 FR 8023149**

(43) Date de publication de la demande:
**05.05.82 Bulletin 82/18**

(45) Mention de la délivrance du brevet:
**08.01.86 Bulletin 86/02**

(84) Etats contractants désignés:
**AT BE CH DE GB IT LI LU NL**

(56) Documents cités:
**FR-A-2 323 308**
**FR-A-2 389 316**

(73) Titulaire: **INSTITUT TECHNIQUE DES CEREALES ET DES FOURRAGES**
**8 Avenue du Président Wilson**
**F-75116 Paris (FR)**

(73) Titulaire: **ASSOCIATION GENERALE DES PRODUCTEURS DE MAIS**
**1 Place Samuel de Lestapis**
**F-64000 Pau (FR)**

(72) Inventeur: **Pregermain, Jacques**
**40 rue St. Didier**
**Paris Seine (FR)**

(74) Mandataire: **Simonnot, Bernard et al**
**Cabinet Simonnot 49, Rue de Provence**
**F-75442 Paris Cédex 09 (FR)**

Courier Press, Leamington Spa, England.

## Description

La présente invention concerne un élément semeur pour parcelles expérimentales, destiné à semer en petites bandes, sans mélange ni manque, des variétés successivement différentes de graines, sur semoir du type pneumatique.

On sait que ce genre de semis demande après traçage au sol de lignes directrices, à opérer en bandes ou parcelles successives, en particulier de trois rangs chacune, alignées longitudinalement et transversalement, avec aller et retour du semoir aux extrémités du champ. Par ailleurs, chaque parcelle est semée d'une variété différente de celle de ses voisines immédiates, la quantité nécessaire de graines de chaque variété, en poids ou en nombre, étant préalablement mesurée excédentairement et ensachée, un diviseur statique répartissant pour chaque rang d'une même parcelle le contenu du sachet correspondant à la variété désirée.

Du fait des contraintes imposées au semoir par ce type de semis, il n'est pas possible d'utiliser, sans les modifier, les semoirs pneumatiques usuels qui sont normalement destinés au semis d'une même variété sur grande parcelle et jusqu'à douze rangs. On connaît cependant des semoirs de ce type comportant un magasin interchangeable, mais ils nécessitent jes manipulations répétées et longues pour les petites parcelles considérées, auxquelles s'ajoutent les risques d'erreurs, et ils sont difficilement utilisables.

Plus particulièrement, on connaît de par le brevet français n° 2 323 308 un élément semeur pour parcelles expérimentales délimitées sur un terrain, monté sur un semoir du type pneumatique muni d'une turbine et d'un circuit général de dépression, cet élément semeur comportant un disque semeur perforé dont une première face est soumise à une dépression sur la majorité de sa surface au moyen d'un couvercle d'aspiration relié à un conduit de dépression et la seconde face est en regard d'une chambre d'alimentation en graines amenées par gravité au moyen d'un conduit relié à une trémie de stockage.

Cet élément semeur connue comporte aussi un ensemble de récupération des graines excédentaires, relié à la chambre d'alimentation. Un volet de fermeture du conduit reliant la trémie à la chambre d'alimentation est également prévu, la vidange de la chambre d'alimentation et l'ouverture dudit volet étant commandées automatiquement par un ensemble de commande de cycle de fonctionnement.

La présente invention vise à remédier aux inconvénients des dispositifs connus, en fournissant un élément semeur rendant automatique le semis avec les semoirs du type pneumatique permettant en particulier:

— le semis régulier de la quantité nécessaire de graines de chaque variété; et
— l'élimination instantanée, en fin de parcelle, et sans les laisser au sol, des graines excédentaires de chaque variété, ainsi que la reprise du semis avec la nouvelle variété, en laissant un espace inoccupé variable généralement court.

Conformément à l'invention, un élément semeur pour parcelles expérimentales délimitées sur un terrain, monté sur un semoir du type pneumatique muni d'une turbine et d'un circuit général de dépression, comporte un disque semeur perforé rotatif dont une première face est soumise à une dépression sur la majorité de sa surface au moyen d'un couvercle d'aspiration relié à la turbine par un conduit de dépression et dont une partie de la seconde face forme une paroi mobile d'une chambre d'alimentation en graines amenées par gravité au moyen d'un conduit relié à une trémie de stockage, cet élément semeur comportant en outre un ensemble de vidange et de récupération des graines, excédentaires de la chambre d'alimentation, un premier volet de fermeture interposé entre la sortie de la trémie et la chambre d'alimentation et éventuellement un ensemble de commande, de cycle de fonctionnement dudit volet de fermeture et de récupération des graines excédentaires, ledit élément semeur étant caractérisé en ce que l'ensemble de vidange et de récupération des graines excendentaires fonctionne par dépression et est relié à la chambre d'alimentation par un conduit d'extraction équipé d'un deuxiéme volet de fermeture et ce qu'un troisième volet d'interruption de dépression est disposé dans le couvercle d'aspiration de manière à permettre de couper l'aspiration sur la partie du disque semeur qui forme la paroi mobile de la chambre d'alimentation, lesdits volets pouvant être commandés par ledit ensemble de commande de cycle.

Cet ensemble de commande de cycle de fonctionnement est destiné à assurer simultanément l'ouverture du deuxiéme volet et la fermeture du troisième volet ainsi que l'ouverture décalée par rapport aux précédentes du premier volet, et réciproquement.

D'autres caractéristiques et avantages de l'invention ressortiront mieux de la description qui va suivre, faite en regard des dessins annexés sur lesquels:

la figure 1 représente un schéma d'un champ expérimental de semis en petites parcelles auquel est destiné le semoir selon l'invention;

la figure 2 représente une vue schématique d'un élément semeur selon l'invention, perpendiculairement au plan du disque semeur; et

la figure 3 représente une vue schématique en coupe selon A—A de la figure 2.

Sur ces dessins, les mêmes références désignent les mêmes éléments.

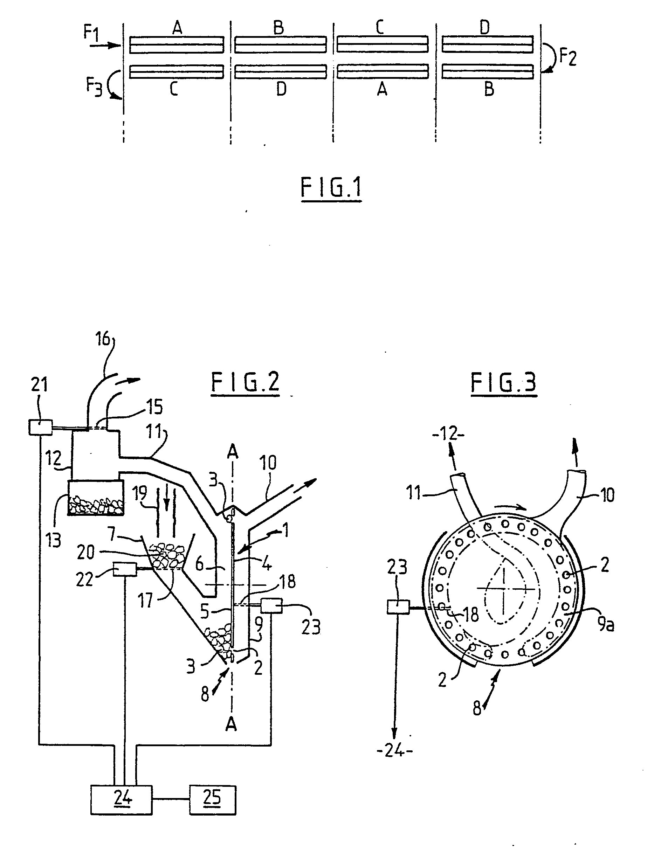

En se référant à la figure 1, le semis expérimental de variétés de graines, notamment du maïs, est effectué en bandes ou parcelles successives, par exemple A à D pour quatre variéés et correspondant chacune à une variété. Chaque parcelle comporte, par exemple, trois rangs, et le semis est réalisé à partir de la flèche F1, point de départ sur une première rangée, avec retour après la quatrième bande, selon la flèche F2, nouveau retour après la quatrième bande de la deuxième rangée, selon la flèche F3, etc. Comme mentionnné plus haut, la variété est changée pour chaque parcelle de façon que chacune d'elles soit semée d'une variété différente de cette de ses voisines immédiates. Dans l'exemple représenté, la première rangée comporte ainsi les parcelles A, B, C, D, tandis que la deuxième rangée comporte des parcelles C, D, A, B, les parcelles voisines des colonnes réalisées ne comportant pas de variétés identiques.

A titre indicatif, la longueur des rangées est de l'ordre de 5 à 10 m, l'espace entre les rangées pouvant être de 0,80 m, l'espace entre parcelles d'une rangée étant de 0,80 à 1 m. On conçoit aisément que pour réaliser un champ de semis de ce type, il y ait lieu de prévoir un semoir automatique qui lui soit adapté.

En se référant aux figures 2 et 3, on rappelle qu'un élément semeur de semoir pneumatique comprend essentiellement un disque circulaire 1 à mince paroi tournant dans son plan vertical et muni d'une ou plusieurs rangées concentriques de perforations équidistantes 2. Le diamètre de chaque perforation 2 est toujours inférieur au diamètre moyen des plus petites graines 3 de l'espèce à semer. Le mouvement de rotation du disque est communiqué par les roues porteuses du semoir, au moyen d'une transmission appropriée et réglable. L'une des faces 4 du disque 1 est soumise à dépression sur environ 3/4 de sa surface par la turbine de l'appareil; l'autre face 5 forme, sur une faible surface, une des parois verticales de la chambre d'alimentation 6 des graines 3 constamment amenées par gravité depuis une trémie de stockage 7.

Les graines 3, par aspiration, sont collées à chaque perforation 2 sans la traverser; un dispositif approprié permet de ne conserver qu'une graine sur la rangée de perforations voulue. Le disque, en tournant, transporte ainsi, suivant une trajectoire circulaire, les graines jusqu'à une zone 8 hors dépression où elles sont libérées et semées, cette zone 8 étant disposée à l'aplomb du sol. La face 4 du disque 1 est disposée en regard d'un couvercle d'aspiration 9 relié par un conduit 10 à la turbine de l'appareil, qui établit la dépression.

De façon connue en soi, le couvercle d'aspiration 9 définit une forme sensiblement annulaire 9a (figure 3) en regard du cercle selon lequel sont disposées les perforations 2, à l'exception d'une zone 8 à l'atmosphère qui correspond à l'emplacement où une graine tombe au sol. La majorité de la surface du disque 1 est donc soumise à la dépression par l'intermédiaire du couvercle d'aspiration 9.

Conformément à l'invention, la chambre d'alimentation 6 est de dimensions réduites, en fonction de la faible quantité de graines à semer par variété, par exemple 100 à 130 graines par rang, et de façon à obtenir un semis in'interrompu éventuellement jusqu'aux trois dernières graines au moins, par rangée de parcelles.

L'ensemble de récupération par dépression des graines excédentaires est relié à la chambre d'alimentation 6 par un condiut d'extraction 11 et comprend un cyclone de séparation 12 dans lequel débouche le conduit 11. Le cyclone 12 est constitué d'une enceinte usuelle comportent à sa partie inférieure un bol de récupération 13 des graines extraites et, à sa partie supérieure, un volet ou trappe 15 interposé dans le circuit de dépression 16 lui-même relié à la turbine de l'appareil.

La sortie de la trémie de stockage 7 est munie d'un autre volet 17 commandant le remplissage de la chambre d'alimentation 6, tandis que le conduit annulaire 9a du couvercle d'aspiration 9 est muni d'un troisième volet 18 au niveau de la chambre d'alimentation 6 et dont la fermeture coupe au moins partiellement la dépression dans ledit conduit 9a.

La trémie de stockage 7 est alimentée par un conduit 19 relié à un diviseur approprié délivrant les quantités requises de chaque variété de graines à partir d'un échantillon unique.

L'élément semeur décrit ci-dessus est bien entendu monté sur un appareil porteur, le semoir, la vitesse de rotation du disque 1 étant convenablement asservie à la vitesse de progression.

En supposant la chambre 6 alimentée en graines 3 de variétés A et la turbine en marche, on ferme le volet 17 de la trémie et l'on ouvre le volet 18 du couvercle d'aspiration 9: l'opération de semis a lieu. Peu avant l'extrémité de parcelle, on ferme le volet 18, interdisant ainsi l'alimentation du dique 1 en graines 3 restant dans la chambre 6, alors que les graines précédemment collées aux perforations 2, toujours soumises à dépression, pousuivent leur trajectoire vers la zone 8, continuant le semis jusqu'à l'extrémité de parcelle; simultanément, on ouvre le volet 15 du cyclone qui, sous l'effet de la dépression du conduit 16, élimine les graines excédentaires encore présentes au fond de la chambre 6 contre la face 5 du disque 1. Les graines sont alors transférées dans le bol de récupération 13. Pendant ou avant les phases de fonctionnement précédentes, la trémie 7 a été alimentée en graines 20, par exemple de variété B. On ferme alors le volet 15 du cyclone, et simultanément, on ouvre le volet 17 de la trémie, puis le volet 18 du couvervle d'aspiration; on referme le volet 17 de la trémie lorsque les graines 20 sont passées dans la chambre 6, et le cycle recommence pour une nouvelle parcelle.

Les opérations décrites ci-dessus s'appliquent simultanément sur chaque élément semeur, afin de réaliser des parcelles de un ou plusieurs rangs, par exemple trois rangs, comme expliqué plus haut.

Conformément à l'invention, l'ensemble de ces opérations, qui pourraient être envisagées manuellement, est rendu entièrement automatique. A cet effet, les trois volets de chaque élément semeur sont reliées chacun à un organe de commande approprié tel qu'un vérin pneumatique, à savoir 21 pour le volet 15, 22 pour le volet 17 et 23 pour le volet 18. Les trois vérins sont à leur tour reliés à un programmateur 24 connu en soi, par exemple du type à cames réglables actionné par moteur électrique ou par tout moyen mécanique relié par embrayage aux roues porteuses de l'appareil. Le programmateur 24 assure, suivant un cycle prédéterminé, les manoeuvres simultanées et successives des volets selon le mode décrit ci-dessus. Vers la fin de chacune des parcelles, en un point déterminé du trajet, sans arrêter le cheminement de l'équipage, un opérateur ou tout moyen de détection approprié connu en soi 25, par exemple impulsion ou contact électrique au passage d'un repère établi sur le terrain, commande la mise en marche du programmateur 24. Bien entendu, le choix du point de déclenchement des opérations, ainsi que le réglage du vérin 23, sont fonction de la vitesse d'avancement, de l'espace désiré entre parcelles et de la densité de peuplement, tandis que la durée de l'action des vérins 21 et 22 et réglée au préalable à une valeur moyenne.

**Revendications**

1. Elément semeur pour parcelles expérimentales délimitées sur un terrain, monté sur un semoir du type pneumatique muni d'une turbine et d'un circuit général de dépression, comportant un disque semeur perforé rotatif (4) dont une première face est soumise à une dépression sur la majorité de sa surface au moyen d'un couvercle d'aspiration (9) relié à la turbine par un conduit de dépression (10) et dont une partie de la seconde face forme une paroi mobile d'une chambre d'alimentation (6) en graines amenées par gravité au moyen d'un conduit relié à une trémie de stockage (7), cet élément semeur comportant en outre un ensemble de vidange et de récupération des graines excédentaires de la chambre (6) d'alimentation, un premier volet de fermeture (17) interposé entre la sortie de la trémie et la chambre d'alimentation (6) et éventuellement un ensemble de commande (24, 25) de cycle de fonctionnement dudit volet de fermeture et de récupération des graines excédentaires, ledit élément semeur étant caractérisé en ce que l'ensemble de vidange et de récupération des graines excédentaires fonctionne par dépression et est relié à la chambre d'alimentation (6) par un conduit d'extraction (11) équipé d'un deuxième volet de fermeture (15) et en ce qu'un troisième volet d'interruption de dépression (18) est disposé dans le couvercle d'aspiration (9) de manière à permettre de couper l'aspiration sur la partie du disque semeur qui forme la paroi mobile de la chambre d'alimentation, lesdits volets pouvant être commandés par ledit ensemble de commande de cycle (24, 25).

2. Elément semeur selon la revendication 1, caractérisé par le fait que l'ensemble de récupération comprend en outre un cyclone (12) muni d'un bol de récupération (13), relié d'une part à ladite chambre d'alimentation par ledit conduit d'extraction et, d'autre part, audit circuit de dépression relié à la turbine, ledit deuxième volet (15) étant intercalé entre ledit cyclone et ledit circuit de dépression.

3. Elément semeur selon la revendication 2, caractérisé par le fait que la trémie de stockage est reliée à un diviseur destiné à alimenter cette dernière en variétés successives de graines selon les quantités requises.

4. Elément semeur selon l'une quelconque des revendications 1 à 3, caractérisé par le fait que ledit ensemble de commande de cycle de fonctionnement comprend des vérins d'actionnement des volets respectifs (22, 21, 23), reliés à un programmateur, lui-même relié à un moyen de détection de repère établi sur le terrain.

5. Elément semeur selon l'une quelconque des revendications 1 à 4, caractérisé par le fait que l'ensemble de commande de cycle de fonctionnement assure simultanément l'ouverture du deuxième volet (15) et la fermeture du troisième volet (18), ainsi que l'ouverture décalée par rapport aux précédentes du premier volet (17) et réciproquement pour un cycle de fonctionnement correspondant au semis d'une parcelle.

**Patentansprüche**

1. Sägerät für auf einem Gelände abgegrenzte Versuchsparzellen, das auf einer mit einer Turbine und einem Unterdruck- Hauptkreis vershenen Sämaschine pneumatischer Art gelagert ist, mit einer drehbaren, gelochten Säscheibe (4), deren erste Seite auf dem grössten Teil ihrer Fläche mittels eines durch eine Unterdruckleitung (10) mit de Turbine verbundenen Saugdeckels (9) einem Unterdruck unterworfen wird, wobei ein Teil seiner zweiten Seite eine bewegliche Wand eines Raumes (6) zur Abgabe von Saatgut bildet, das mittels einer mit einem Vorratstrichter (7) verbundenen Leitung durch die Schwerkraft zugeführt wird, weiter mit einer Anordnung zur Entleerung und zur Rückgewinnung von überschüssigem Saatgut aus dem Abgaberaum (6), einer ersten zwischen dem Trichterauslauf und dem Abgaberaum (6) angeordneten Verschlussklappe (17) und gegebenfalls einer Anordnung (24, 25) zur Steuerung der Arbeitszyklen der Verschlussklappe und der Rückgewinnung von überschüssigem Saatgut, dadurch gekennzeichnet, dass die Anordnung zur Entleerung und zur Rückgewinnung des überschüssigen Saatgutes durch Unterdruck arbeitet und durch eine mit einer zweiten Verschlussklappe (15) ausgerüstete Abnahmeleitung (11) mit dem Abgaberaum (6) verbunden ist, und dass eine dritte klappe (18) zur Unterdruckunterbrechung derart im Saugdeckel (9) angeordnet ist, dass die Ansaugung am die bewegliche Wand des Abgaberaumes bildenden Teil der Säscheibe unterbrochen werden kann, wobei die Klappen durch die Anordnung (24, 25) zur Zyklensteuerung angesteuert werden können.

2. Sägerät nach Anspruch 1, dadurch gekennzeichnet, dass die Rückgewinnungsanordnung ferner einen Zyklon (12) mit einem Rückgewinnungsbehälter (13) aufweist, der einerseits mit dem Abgaberaum durch die Abnahmeleitung under andererseits mit dem an die Turbine angeschlossenen Unterdruckkreis verbunden ist, wobei die zweite Klappe (15) zwischen dem Zyklon und dem Unterdruckkreis angeordnet ist.

3. Sägerät nach Anspruch 2, dadurch gekennzeichnet, dass der Vorratstrichter mit einem Teiler verbunden ist, der dazu bestimmt ist, letzteren mit einanderfolgenden Saatgut-Sorten entsprechend den erforderlichen Mengen zu beschicken.

4. Sägerät nach irgend einem der Ansprüche 1 bis 3, dadurch gekennzeichnet, das die Anordnung zur Steuerung der Arbeitszyklen Kolben-Zylinder-Einheiten (22, 21, 23) für die Betätigung der jeweiligen Klappen umfasst, die mit einem Programmschaltwerk verbunden sind, das seinerseits an ein Mittel zur Erfassung einer am Gelände angebrachten Markierung angeschlossen ist.

5. Sägerät nach irgend einem der Ansprüche 1 bis 4, dadurch gekennzeichnet, dass die Anordnung zur Steuerung der Arbeitszyklen die Öffnung der zweiten Klappe (15) und die Schliessung der dritten Klappe (18), sowie die gegenüber den ersteren verschobene Öffnung der ersten Klappe (17) und umgekehrt, für einen der Aussaat einer Parzelle entsprechenden Arbeitszyklus, gleichzeitig bewirkt.

**Claims**

1. A seed-sowing element for experimental plots delimited on a piece of ground, mounted on a drill of the pneumatic type having a turbine and a general depression circuit, comprising a rotary perforated seed-sowing disk (4), a first face of which is subjected to a depression over the majority of its surface by means of a suction cover (9) connected to the turbine by a depression duct (10) and a part of the second face of which forms a moving wall of a chamber (6) for supplying seeds fed by gravity by means of a duct connected to a storage hopper (7), said seed-sowing element further comprising a draining and recovering assembly for the excess-seeds in the supply chamber (6), a first closing flap (17) positioned between the outlet of the hopper and the supply chamber (6) and possibly an assembly (24, 25) for controlling the operating cycle of said closing flap for recovering the excess-seeds, said seed-sowing element being characterized in that the draining and recovering assembly for the excess-seeds is depression operated and is connected to the supply chamber (6) by an extraction duct (11) having a second closing flap (15) and in that a third depression cutting-off flap (18) is positioned in the suction cover (9) so as to allow to cut-off the suction on the part of the seed-sowing disk which forms the moving wall of the supply chamber, said flaps being possibly controlled by said cycle control assembly (24, 25).

2. A seed-sowing element as claimed in claim 1, characterized in that the recovery assembly further comprises a cyclone (12) having a recovery bowl (13), connected on the one hand to said supply chamber by said extraction duct and, on the other hand, to said depression circuit connected to the turbine, said second flap (15) being inserted between said cyclone and said depression circuit.

3. A seed-sowing element as claimed in claim 2, characterized in that the storage hopper is connected to a divider for supplying this latter with successive varieties of seeds depending on the quantities required.

4. A seed-sowing element as claimed in any one of claims 1 to 3, characterized in that said operating cycle control assembly comprises jacks (22, 21, 23), for actuating the respective flaps, connected to a programmer, itself connected to a means for detecting a datum point set up on the ground.

5. A seed-sowing element as claimed in any one of claims 1 to 4, characterized in that the operating cycle control assembly causes simultaneously opening of the second flap (15) and closing of the third flap (18), as well as the opening of the first flap (17) staggered with respect to the two preceding ones and conversely for an operating cycle corresponding to the sowing of a plot.

FIG.1

FIG.2

FIG.3